# EUROPÄISCHE PATENTANMELDUNG

(11) **EP 4 477 361 A1**
(43) Veröffentlichungstag der Anmeldung: **18.12.2024**
(21) Anmeldenummer: 24178754.8
(22) Anmeldetag: 29.05.2024
(51) Int. Cl.: B25B 11/00, B23Q 3/154

(54) **VORRICHTUNG UND VERFAHREN ZUR FIXIERUNG VON GEGENSTÄNDEN MITTELS MAGNETKRÄFTEN**

(30) Priorität: 15.06.2023 DE 102023115701
(71) Anmelder: SAV GmbH, 90451 Nürnberg (DE)
(72) Erfinder: Leikauf, Dieter, 90451 Nürnberg (DE)
(74) Vertreter: Ruckh, Rainer Gerhard

(57) **Zusammenfassung**

Die Erfindung betrifft eine Vorrichtung zur Fixierung von Gegenständen mittels Magnetkräften, die mit einer Anordnung von Magneten (2) generiert werden, wobei wenigstens eine Linearanordnung von Magneten (2) vorhanden ist. Die Pole von Magneten (2) dieser Linearanordnung sind umschaltbar, wodurch eine Polteilung für diese Magnete (2) erhalten wird. Die Polteilung wird abhängig von der Anzahl übereinanderliegender Gegenstände vorgegeben.

## Beschreibung

Die Erfindung betrifft eine Vorrichtung und ein Verfahren zur Fixierung eines Gegenstands mittels Magnetkräften.

Derartige Vorrichtungen können beispielsweise als magnetische Spannsysteme ausgebildet sein.

Magnetische Spannsysteme werden im Bereich der Werkstückbearbeitung zum Spannen von Werkstücken eingesetzt. Durch das Spannen der Werkstücke mittels des magnetischen Spannsystems sind die Werkstücke in vorgegebenen Positionen im Bereich von Bearbeitungsmaschinen fixiert, so dass eine Bearbeitungsmaschine das Werkstück mit geeigneten Werkzeugen bearbeiten kann.

Das Spannen eines Werkstücks erfolgt dadurch, dass dieses durch das Magnetfeld der Magnete magnetisiert wird.

Derartige magnetische Spannsysteme können insbesondere eine Linearanordnung von Magneten aufweisen. Die Magnete bilden dabei eine fest vorgegebene Anordnung alternierender Nord- und Südpole aus, wodurch eine fest vorgegebene Polteilung für die Linearanordnung erhalten wird.

Die Polteilung ist definiert vom Abstand der Mitte eines Nordpols zum nächsten Südpol bzw. umgekehrt.

Mit derartigen Spannsystemen können insbesondere auch Werkstücke mit großen Längen gespannt werden, wobei die Längen der Werkstücke im

Meterbereich liegen können. Die Dimension der Linearanordnung ist dementsprechend angepasst.

Insbesondere bei derartigen Spannsystemen besteht eine wesentliche Anforderung darin, zwei vorzugsweise identische Werkstücke übereinanderliegend zu spannen, um dann die beiden Werkstücke simultan mit einer Bearbeitungsmaschine bearbeiten zu können, wodurch sich ein erheblicher Rationalisierungseffekt ergibt.

Um ein Werkstück sicher zu spannen, müssen mit den Magneten Magnetfelder mit entsprechenden Feldhöhen generiert werden, so dass die Magnetfelder über die Höhe des Werkstücks möglichst vollständig erstrecken.

Diese Anforderung gilt insbesondere dann, wenn zwei übereinanderliegende Werkstücke gespannt werden sollen. Dann müssen mit den Magneten Magnetfelder erzeugt werden, die Feldhöhen derart aufweisen, dass die Magnetfelder nicht nur im unteren Werkstück, sondern auch im oberen Werkstück verlaufen.

Bei den vorgenannten magnetischen Spannsystemen reichen die Feldhöhen der Magnetfelder oft nicht aus, um beide Werkstücke über deren gesamte Länge gleichförmig zu spannen.

Auch für den Fall, dass zum Spannen zweier übereinanderliegender Werkstücke hinreichend hohe Feldhöhen erzielt werden, besteht ein Problem oft darin, dass lokal die Magnetfelder über das obere Werkstück hervorstehen. Dieser über das obere Werkstück überstehende Teil der Magnetfelder trägt jedoch nichts zur Haftkraft, d.h. der mit den Magneten generierten magnetischen Spannkraft, bei. Dies bedeutet, dass die Haftkräfte lokal reduziert sind, so dass kein gleichförmiges Spannen der Werkstücke über deren Längen gewährleistet ist.

Dies führt bei der Bearbeitung der Werkstücke mittels einer Bearbeitungsmaschine zu unzufriedenstellenden Ergebnissen. Da die Werkstücke lokal mit geringeren Haftkräften gespannt sind, ist der Halt der Werkstücke lokal reduziert, so dass dort lokal eine Bewegung der Werkstücke möglich ist. Dadurch wird eine Welligkeit im Bearbeitungsergebnis erhalten, d.h. die Werkstücke werden über deren Längen nicht gleichförmig bearbeitet.

Der Erfindung liegt die Aufgabe zugrunde eine Vorrichtung und ein Verfahren bereitzustellen, mittels dessen eine zuverlässige, reproduzierbare Fixierung von unterschiedlichen Gegenständen mittels Magnetkräften ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Vorrichtung zur Fixierung von Gegenständen mittels Magnetkräften, die mit einer Anordnung von Magneten generiert werden, wobei wenigstens eine Linearanordnung von Magneten vorhanden ist. Die Pole von Magneten dieser Linearanordnung sind umschaltbar, wodurch eine Polteilung für diese Magnete erhalten wird. Die Polteilung wird abhängig von der Anzahl übereinanderliegender Gegenstände vorgegeben.

Die Erfindung betrifft auch ein entsprechendes Verfahren.

Die erfindungsgemäße Vorrichtung bildet eine magnetische Spannvorrichtung, mittels derer Gegenstände, insbesondere Werkstücke fixiert werden. Die Gegenstände, insbesondere Werkstücke, werden insbesondere in vorgegebenen Sollpositionen fixiert, so dass sie in nachfolgenden Arbeitsschritten bearbeitet werden können.

Die erfindungsgemäße Vorrichtung weist im einfachsten Fall nur eine Linearanordnung von Magneten auf, die bestimmte Pole ausbilden.

Erfindungsgemäß kann zumindest für einen Teil der Magnete eine Polumschaltung vorgesehen sein, d.h. durch Umschaltvorgänge können die Pole dieser Magneten umgeschaltet werden.

Durch diese Polumschaltung kann die Polteilung der Magnete der Linearanordnung gezielt geändert werden. Die Polteilung ist dabei definiert durch den Abstand der Mitte eines Nordpols zum Abstand der Mitte des darauffolgenden Nordpols. Für den Fall, dass bei der Linearanordnung eine alternierende Anordnung von Nord- und Südpolen vorliegt, entspricht die Polteilung dem Abstand zweier aufeinanderfolgenden Magneten. Für den Fall, dass z.B. bei der Linearanordnung eine alternierende Anordnung derart vorgesehen ist, dass auf zwei aufeinanderfolgende Nordpole zwei aufeinanderfolgende Südpole usw. folgen, ist die Polteilung doppelt so groß.

Durch eine Variation der Polteilung werden die Feldhöhen der mit den Magneten erzeugten Magnetfelder verändert. Dabei sind generell die Feldhöhen umso höher desto größer die Polteilung ist.

Sind also bei der erfindungsgemäßen Linearanordnung die Eigenschaften der Magnete, wie z.B. die Stärken der generierten Magnetfelder, fest und unverändert vorgegeben, kann allein durch eine Polumschaltung von Magneten dieser Linearanordnung die Polteilung verändert werden und damit eine Variation der Feldhöhen der Magnetfelder erzielt werden.

Dieser Effekt wird erfindungsgemäß dafür ausgenutzt, damit mit der Vorrichtung unterschiedliche Gegenstände sicher fixiert werden können.

Erfindungsgemäß wird die Polteilung der Magnete variabel derart vorgegeben, dass dadurch eine frei wählbare Anzahl von übereinanderliegenden Gegenständen, insbesondere Werkstücken gespannt werden kann.

Obwohl natürlich nur ein Gegenstand mit der erfindungsgemäßen Vorrichtung gespannt werden kann, können mit der erfindungsgemäßen Einstellung der Polteilung zwei oder auch mehr Gegenstände übereinander liegend fixiert werden.

Dadurch wird eine rationalisierte Bearbeitung von Gegenständen bzw. Werkstücken ermöglicht, da in einem Arbeitsvorgang mehrere an der Vorrichtung fixierte Gegenstände bzw. Werkstücke auf einmal bearbeitet werden können.

Die übereinanderliegend mit der erfindungsgemäßen Vorrichtung fixierten Werkstücke können insbesondere simultan mit einer Bearbeitungsmaschine bearbeitet werden.

Insbesondere können auch langgestreckte, stab- oder schienenförmige Werkstücke mit der erfindungsgemäßen Spannvorrichtung gespannt werden. Die Längsachse des oder jedes Werkstücks auf der Spannvorrichtung verlaufen dabei in Richtung, vorzugsweise parallel zur Längsrichtung, der Linearanordnung der Magnete.

Je nach Ausbildung und Anzahl der gespannten Werkstücke wird die Polteilung der Magnete vorgegeben.

Gemäß einer besonders vorteilhaften Ausführungsform ist die Polteilung einer der wenigstens einen Linearanordnung von Magneten räumlich veränderlich ausgebildet.

Damit kann eine Anpassung an räumliche variierende Höhenprofile von zu fixierenden Gegenständen erfolgen, wodurch die Funktionalität der erfindungsgemäßen Vorrichtung erheblich erweitert ist.

Besonders vorteilhaft ist die räumliche Variation der Polteilung der Linearanordnung von Magneten an unterschiedliche Anzahlen von übereinanderliegenden zu fixierenden Gegenständen angepasst.

Alternativ oder zusätzlich ist die räumliche Variation der Polteilung der Linearanordnung von Magneten an unterschiedliche Höhen von zu fixierenden Gegenständen angepasst.

Generell wird die Polteilung abhängig von Kenngrößen der Werkstücke, wie z.B. deren Geometrie, Legierungszusammensetzung, Wärmebehandlung und dergleichen vorgegeben. Weiterhin wird die Polteilung abhängig davon gewählt, ob nur ein Werkstück oder zwei übereinanderliegende Werkstücke gespannt werden sollen.

Diese Vorgaben sind in Form von Kennlinien, beispielsweise in einer Rechnereinheit wie einem PC, hinterlegt und von einem Benutzer abrufbar, so dass er die Polteilung der Magnete in geeigneter Weise vorgeben kann.

Die Variation der Polteilung der Linearanordnung der Magnete erfolgt erfindungsgemäß durch eine Polumschaltung von Magneten dieser Linearanordnung.

Gemäß einer vorteilhaften Ausführungsform weisen die Magnete Spulen auf, mittels derer die Polaritäten der Magnete vorgegeben sind.

Dann ist durch eine Ansteuerung einer Spule die Polarität des jeweiligen Magneten umschaltbar.

Zweckmäßig sind hierbei die Magnete in Form von Elektromagneten oder Elektro-Permanent-Magneten ausgebildet.

Für die Variation der Polteilung der Linearanordnung der Magnete ist vorteilhaft eine Umschalteinheit vorhanden, mittels derer die Pole der polumschaltbaren Magnete umschaltbar sind.

Die Umschalteinheit kann eine Rechnereinheit, wie z.B. einen Mikroprozessor, aufweisen, der den polumschaltbaren Magneten zugeordnete Schaltmittel steuert. Die Schaltmittel können beispielsweise die Richtung des den Spulen der polumschaltbaren Magneten zugeführten Stroms steuern.

Prinzipiell können alle Magnete der Linearanordnung polumschaltbar sein, so dass sich bei der Linearanordnung nahezu beliebige Polteilungen realisieren lassen.

Insbesondere ist nur jeder zweite Magnet der Linearanordnung, bzw. die Hälfte der Magnete, polumschaltbar. Dies vereinfacht die Ansteuerlogik zur Polumschaltung erheblich, da nicht jeder, sondern nur jeder zweite Magnet mit der Umschalteinheit angesteuert werden muss. Dies erlaubt zwar nur eine begrenzte Anzahl von Realisierungen von Polteilungen, jedoch sind diese ausreichend für eine große Anzahl verschiedener Applikationen, insbesondere auch für die Anwendungsfalle, bei welchen nur ein Werkstück oder zwei übereinanderliegende Werkstücke mit der Spannvorrichtung gespannt werden müssen.

Wird mit der Spannvorrichtung nur ein Werkstück gespannt, so wird vorteilhaft eine kleinere Polteilung gewählt als für den Fall, dass mit der Spannvorrichtung zwei übereinanderliegende Werkstücke gespannt werden.

Durch diese Polumschaltung werden für die beiden Anwendungsfälle jeweils Feldhöhen der Magnetfelder derart generiert, dass diese vollständig in dem oder in den Werkstücken verlaufen, wobei insbesondere vermieden wird, dass Bereiche der Magnetfelder über das oder die Werkstücke hervorstehen. Dadurch werden lokale Reduzierungen der Haftkräfte beim Spannen des bzw. der Werkstücke vermieden, d.h. die Flussdichten der Magnetfelder sind über die Längen des oder der Werkstücke im Wesentlichen homogen und konstant. Dadurch können das oder die Werkstücke über deren gesamte Längen mit einer Bearbeitungsmaschine reproduzierbar und gleichförmig bearbeitet werden, d.h. es entstehen keine Welligkeiten im Bearbeitungsergebnis bei der Bearbeitung des oder jedes Werkstücks.

Durch die Polumschaltbarkeit können generell ungleichmäßige Flussdichteverteilungen der Magnetfelder und daraus resultierende Sekundäreffekte reduziert werden. Ein Beispiel hierfür sind geometrische Veränderungen von Werkstücken aufgrund von Magnetostriktion im Bereich von 0,2 µm bis 0,8 µm.

Die erfindungsgemäße Vorrichtung, insbesondere Spannvorrichtung kann dahingehend erweitert sein, dass diese eine Matrixanordnung von Magneten aufweist. Damit weist die Vorrichtung sowohl in Spaltenrichtung als auch in Zeilenrichtung mehrere Linearanordnungen von Magneten auf.

Dann können Magnete von Linearanordnungen in Zeilen- und/oder Spaltenrichtung in ihrer Polarität umgeschaltet werden, so dass sowohl in Zeilenrichtung als auch in Spaltenrichtung der Matrix die Polrichtung von Linearanordnungen von Magneten geändert werden kann.

Die Erfindung wird im Folgenden anhand der Zeichnungen erläutert. Es zeigen:
- Figur 1:: Ausführungsbeispiel der erfindungsgemäßen Vorrichtung in Form eines Spannsystems mit einem gespannten Werkstück.
- Figur 2:: Blockschaltbild der Vorrichtung gemäß Figur 1.
- Figuren 3a-d:: Darstellungen von Polumschaltungen von Magneten der Vorrichtung gemäß Figur 1.
- Figur 4a:: Vorrichtung gemäß Figur 1 mit zwei gespannten, identischen Werkstücken.
- Figur 4b:: Vorrichtung gemäß Figur 1 mit zwei gespannten, unterschiedlichen Werkstücken.
- Figur 5:: Ausführungsbeispiel der erfindungsgemäßen Vorrichtung mit einer Matrixanordnung von Magneten.

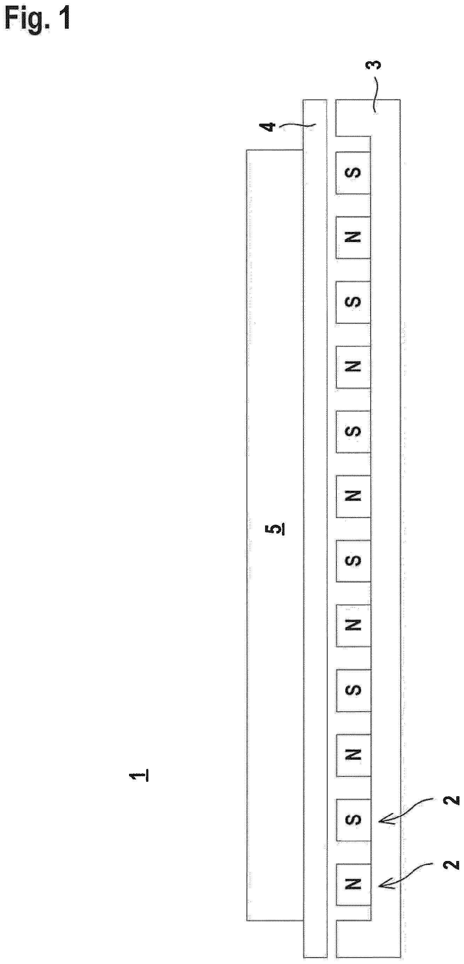

Figur 1 zeigt ein Ausführungsbeispiel der erfindungsgemäßen Vorrichtung in Form einer Spannvorrichtung 1.

Die Spannvorrichtung 1 umfasst eine Linearanordnung von Magneten 2, die in einem Gehäuse 3 gelagert werden. Die stabförmigen Magnete 2 erstrecken sich über die gesamte Breite des Gehäuses 3 und bilden so eine Reihenanordnung, wobei bei der Anordnung gemäß Figur 1 die Magnete 2 mit Nordpolen N und Südpolen S alternierend im Gehäuse 3 angeordnet sind. Die offene Oberseite des Gehäuses 3 ist mit einer Polplatte 4 abgeschlossen. Die Oberseite der Polplatte 4 bildet eine Auflagefläche, auf der ein zu spannendes Werkstück 5 gelagert ist.

Im vorliegenden Fall weisen die identisch ausgebildeten Magnete 2 jeweils einen Kern aus magnetisierbarem Material auf, der von Spulen umgeben ist. Die Magnete 2 bilden somit Elektromagnete. Besteht der Kern aus Permanentmagnetmaterial, bilden die Magnete 2 Elektro-Permanent-Magnete. Bei der Darstellung gemäß Figur 1 weist die Spannvorrichtung 1 zwölf Magnete 2 auf. Natürlich kann auch eine andere Anzahl von Magneten 2 vorgesehen sein.

Durch Bestromung der Spulen der Magnetfelder erzeugen die Magnete 2 Magnetfelder, mit denen das Werkstück 5 magnetisiert wird. Mit den so generierten Magnetkräften, d.h. Haftkräften, wird das Werkstück 5 gespannt.

Das Werkstück 5 kann insbesondere stab- oder schienenförmig ausgebildet sein, so dass dessen Länge erheblich größer ist, als dessen Ausdehnung quer zur Längsrichtung. Dementsprechend bilden die Magnete 2 der Spannvorrichtung 1 eine entsprechend dimensionierte Linearanordnung.

Erfindungsgemäß können Pole von Magneten 2 dieser Linearanordnung umgeschaltet werden.

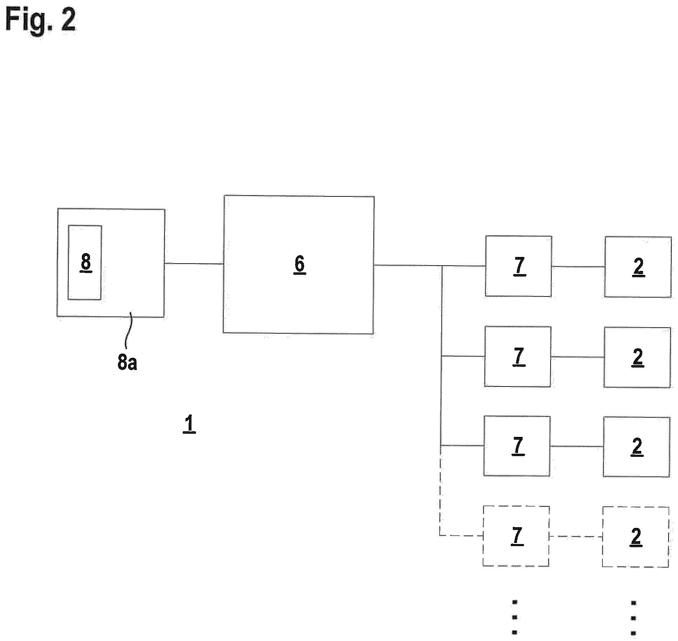

Wie in Figur 2 dargestellt, weist die Spannvorrichtung 1 hierzu eine Umschalteinheit 6 auf. Die Umschaltung weist hierzu eine Rechnereinheit, wie z.B. einen Mikroprozessor, auf, der Schaltelemente 7 ansteuert, mit denen die Pole von Magneten 2 der Spannvorrichtung 1 umgeschaltet werden können. Beispielsweise erfolgt die Umschaltung derart, dass mit den Schaltelementen 7 die Stromrichtungen der Ströme, die den Spulen der jeweiligen Magnete 2 zugeführt werden, geändert werden.

Der Umschalteinheit 6 ist eine Ein-/Ausgabeeinheit 8 zugeordnet, über welche ein Benutzer Eingabebefehle zur Steuerung der Umschalteinheit 6 eingeben kann. Die Ein-/Ausgabeeinheit 8 ist in einer Rechnereinheit 8a, wie z.B. einem PC, integriert. Die Rechnereinheit 8a steuert die Umschalteinheit 6 an.

Mit der Umschalteinheit 6 können prinzipiell die Pole aller Magnete 2 umgeschaltet werden.

Alternativ sind für eine Anzahl der Magnete 2 der Spannvorrichtung 1 die Pole fest vorgegeben, wobei dann nur die Pole der restlichen Magnete 2 umgeschaltet werden, was den Schaltungsaufwand für die Durchführung der Umschaltvorgänge reduziert.

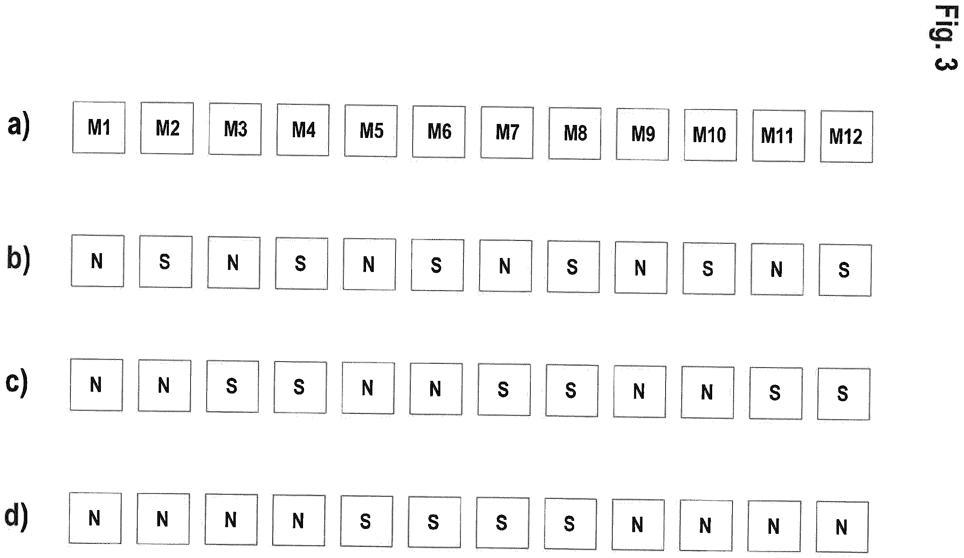

Derartige Ausführungsbeispiele zeigen die Figuren 3a bis 3d.

In Figur 3a sind die Magnete 2 der Spannvorrichtung 1 gemäß Figur 1 entsprechend ihrer Reihenfolge in der Linearanordnung M1 ... M12 bezeichnet.

Figur 3b zeigt eine Grundkonfiguration der Magnete 2 mit einer alternierenden Anordnung von Nord- N und Südpolen S. Diese Anordnung weist eine Polteilung (definiert durch den Abstand eines Nordpols N zum nächsten Südpol S) auf, die dem Abstand zweier benachbarter Magnete 2 entspricht.

Figur 3c zeigt eine Konfiguration der Magnete 2, bei der auf zwei benachbarte Nordpole N zwei benachbarte Südpole S usw. folgen. Diese Anordnung weist eine Polteilung auf, die doppelt so groß wie die Polteilung der Anordnung gemäß Figur 3b ist.

Für die Umschaltung zwischen den Konfigurationen der Figuren 3b und 3c ist es ausreichend, wenn die Magnete M2, M3, M6, M7, M10, M11 polumschaltbar sind. Die restlichen Magnete 2 brauchen nicht polumschaltbar sein.

Figur 3d zeigt eine Konfiguration der Magnete 2, bei der auf vier benachbarte Nordpole N vier benachbarte Südpole S usw. folgen. Diese Anordnung weist eine Polteilung auf, die viermal so groß wie die Polteilung der Anordnung gemäß Figur 3b ist.

Für die Umschaltung zwischen den Konfigurationen der Figuren 3b und 3d ist es ausreichend, wenn die Magnete M2, M4, M5, M7, M10, M12 polumschaltbar sind.

Figur 1 zeigt eine Applikation, bei der ein Werkstück 5 mit der Spannvorrichtung 1 gespannt wird, wobei die Längsachse des Werkstücks 5 parallel zur Längsachse der Linearanordnung der Magnete 2 verläuft.

In diesem Fall ist die Konfiguration mit alternierenden Nord- N und Südpolen S mit der Umschalteinheit 6 aktiviert. Mit dieser Konfiguration werden Feldhöhen der Magnetfelder derart generiert, dass die Magnetfelder über die gesamte Länge der Linearanordnung innerhalb des Werkstücks 5 verlaufen, ohne dass die Magnetfelder über das Werkstück 5 nach oben hervorstehen, was zu einer lokalen Reduzierung der Haltekraft führen würde.

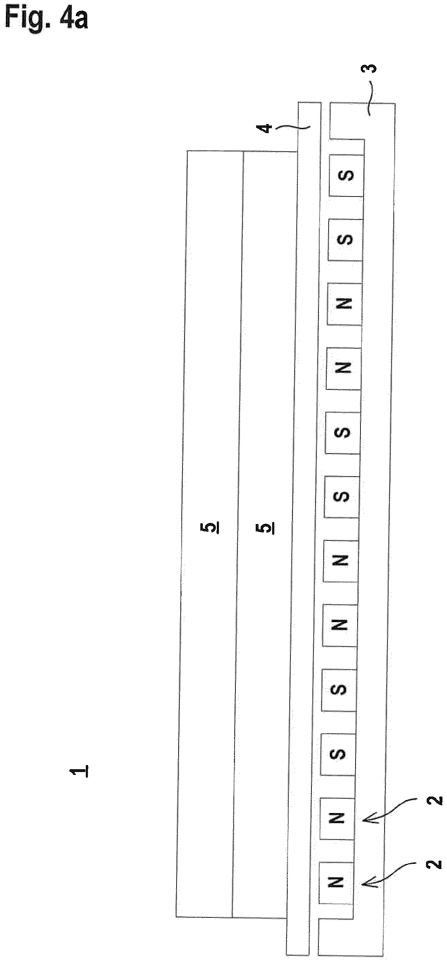

Figur 4a zeigt eine Applikation, bei der zwei identische Werkstücke 5 mit der Spannvorrichtung 1 gespannt sind, wobei die Längsachsen der Werkstücke 5 parallel zur Längsachse der Linearanordnung der Magnete 2 verlaufen und wobei beide Werkstücke 5 dieselbe Länge aufweisen.

In diesem Fall ist die Konfiguration mit paarweise wechselnden Nord- N und Südpolen S gemäß Figur 3c mit der Umschalteinheit 6 aktiviert. Mit dieser Konfiguration werden Feldhöhen der Magnetfelder derart generiert, dass die Magnetfelder über die gesamte Länge der Linearanordnung innerhalb beider Werkstücke 5 verlaufen, ohne dass die Magnetfelder über die Werkstücke 5 nach oben herausstehen, was zu einer lokalen Reduzierung der Haltekraft führen würde. Da die Polteilung der Linearanordnung der Magnete 2 doppelt so groß wie die Polteilung im Fall von Figur 1 ist, werden entsprechend größere Feldhöhen der Magnetfelder erreicht, so dass die Magnetfelder im Wesentlichen gleichförmig in beiden Werkstücken 5 verlaufen.

Somit wird für beide in den Figuren 1 und 4a dargestellten Applikationen ein gleichförmiges Spannen der Werkstücke 5 über deren gesamte Länge realisiert.

Die Vorgabe der mit der Umschalteinheit 6 einstellbaren Polteilung erfolgt durch die Rechnereinheit 8a generell abhängig von Kenngrößen der Werkstücke 5 (Geometrie, Legierungszusammensetzung, Wärmebehandlung u. dgl.) und abhängig davon, wie viele Werkstücke 5 übereinanderliegend angeordnet sind. Für diese Kenngrößen können als Kennlinien passende Polteilungen in der Rechnereinheit 8a oder in der Umschalteinheit 6 gespeichert sein. Mittels der Ein-/Ausgabeeinheit 8 kann ein Benutzer die Kennlinie anfordern und für den jeweiligen Applikationsfall die geeignete Polteilung wählen.

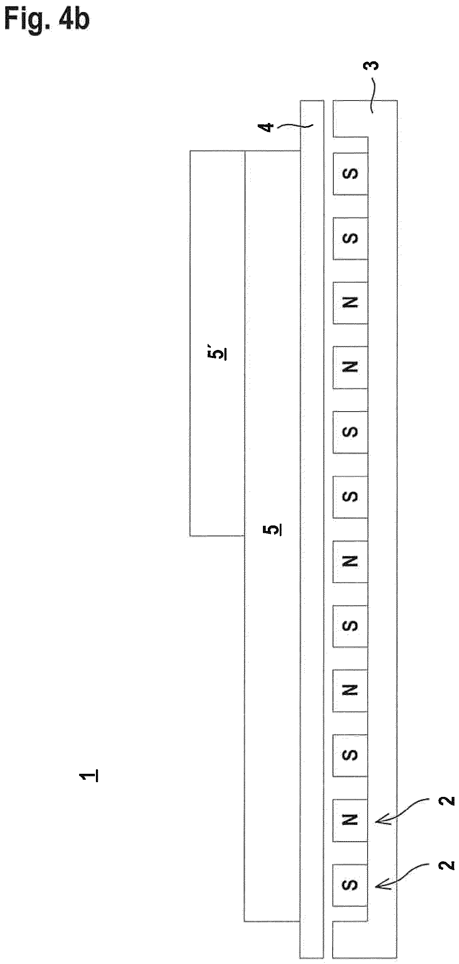

Figur 4b zeigt eine Variante der Ausführungsform gemäß Figur 4a.

Im Unterschied zur Anordnung gemäß Figur 4a sind bei der Anordnung gemäß Figur 4b auf der Linearanordnung der Magnete 2 zwei Werkstücke 5, 5' unterschiedlicher Längen gelagert.

Das untere Werkstück 5 erstreckt sich über die gesamte Länge der Linearanordnung, das zweite, kürzere Werkstück 5', das auf dem längeren Werkstück 5 aufliegt, erstreckt sich nur über eine Hälfte der Linearanordnung. Analog zur Ausführungsform gemäß Figur 4a verlaufen die Längsachsen der Werkstücke 5, 5' parallel zueinander und parallel zur Längsachse der Linearanordnung der Magnete 2.

Um die beiden Werkstücke 5, 5' in einem Spannvorgang mit der erfindungsgemäßen Spannvorrichtung 1 zu spannen, wird mittels der Rechnereinheit 8a und der Umschalteinheit 6 eine örtlich variierende Polteilung vorgegeben, wie in Figur 4b dargestellt.

Demzufolge wird in dem Bereich, in dem nur das Werkstück 5 auf der Linearanordnung aufliegt, die Polteilung gemäß Figur 1 eingestellt. Andererseits wird in dem Bereich, in dem beide Werkstücke 5, 5' auf der Linearanordnung aufliegen, die Polteilung gemäß Figur 4a eingestellt.

Durch diese räumlich variierende Polteilung wird erreicht, dass die Feldhöhen der Magnetfelder der Magnete 2 vollständig in allen zu spannenden Werkstücken 5, 5' verlaufen, so dass beide Werkstücke 5, 5' sicher und fest gespannt sind.

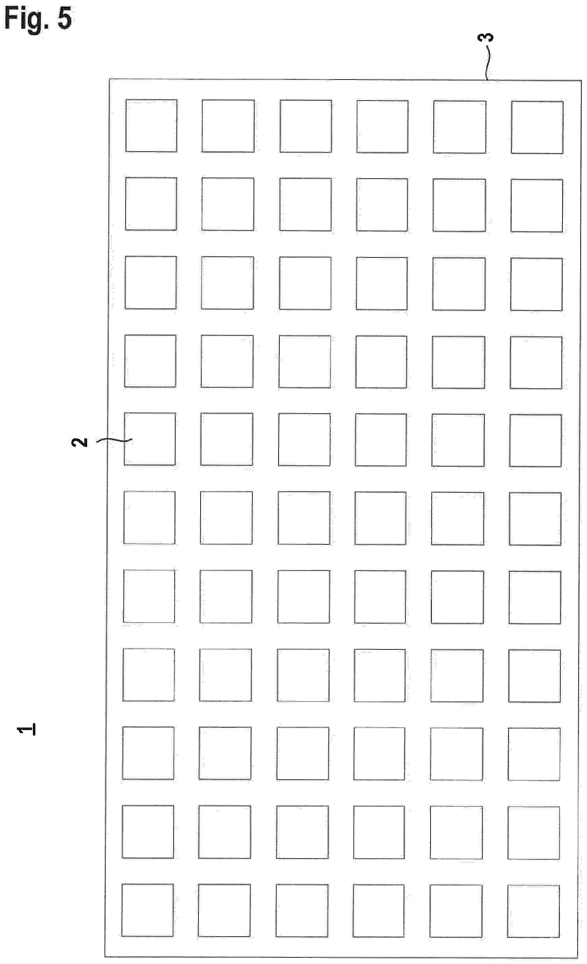

Figur 5 zeigt eine Variante der erfindungsgemäßen Vorrichtung, insbesondere Spannvorrichtung 1, mit einer Matrixanordnung von Magneten 2.

Die Magnete 2 in den einzelnen Zeilen und Spalten der Matrix bilden Linearanordnungen von Magneten 2, für welche entsprechend der Ausführungsform der Figuren 1 bis 3 eine Polumschaltung von Magneten 2 vorgesehen ist.

### Bezugszeichenliste

- (1): Spannvorrichtung
- (2): Magnet
- (3): Gehäuse
- (4): Polplatte
- (5, 5'): Werkstück
- (6): Umschalteinheit
- (7): Schaltelement
- (8): Ein-/Ausgabeeinheit
- (8a): Rechnereinheit

- (N): Nordpol
- (S): Südpol

## Patentansprüche

1. Vorrichtung zur Fixierung von Gegenständen mittels Magnetkräften, die mit einer Anordnung von Magneten (2) generiert werden, wobei wenigstens eine Linearanordnung von Magneten (2) vorhanden ist, wobei Pole von Magneten (2) dieser Linearanordnung umschaltbar sind, wodurch eine Polteilung für diese Magnete (2) erhalten wird, **dadurch gekennzeichnet, dass** die Polteilung abhängig von der Anzahl übereinanderliegender Gegenstände vorgegeben wird.

2. Vorrichtung nach Anspruch 1, **dadurch gekennzeichnet, dass** die Polteilung der wenigstens einen Linearanordnung von Magneten (2) räumlich veränderlich ausgebildet ist.

3. Vorrichtung nach Anspruch 2, **dadurch gekennzeichnet, dass** die räumliche Variation der Polteilung der Linearanordnung von Magneten (2) an unterschiedliche Anzahlen von übereinanderliegenden zu fixierenden Gegenständen angepasst ist.

4. Verteileranordnung nach Anspruch 3, **dadurch gekennzeichnet, dass** die räumliche Variation der Polteilung der Linearanordnung von Magneten (2) an unterschiedliche Höhen von zu fixierenden Gegenständen angepasst ist.

5. Vorrichtung nach einem der Ansprüche 1 bis 4, **dadurch gekennzeichnet, dass** durch eine Polteilung Feldhöhen von mit den Magneten (2) generierten Magnetfeldern vorgegeben werden.

6. Vorrichtung nach einem der Ansprüche 1 bis 5, **dadurch gekennzeichnet, dass** diese eine Matrixanordnung von Magneten (2) aufweist, in welcher zeilen- oder spaltenweise Pole von Magneten (2) umschaltbar sind.

7. Vorrichtung nach einem der Ansprüche 1 bis 6, **dadurch gekennzeichnet, dass** in der oder einer Linearanordnung von Magneten (2) eine vorgegebene Anzahl von Magneten (2) polumschaltbar ist, und dass die weiteren Magneten (2) der Linearanordnung nicht polumschaltbar sind.

8. Vorrichtung nach einem der Ansprüche 1 bis 7, **dadurch gekennzeichnet, dass** die Magnete (2) Spulen aufweisen, mittels derer die Polaritäten der Magnete (2) vorgegeben sind.

9. Vorrichtung nach Anspruch 8, **dadurch gekennzeichnet, dass** durch eine Ansteuerung einer Spule die Polarität des jeweiligen Magneten (2) umschaltbar ist.

10. Vorrichtung nach einem der Ansprüche 1 bis 8, **dadurch gekennzeichnet, dass** die Magnete (2) in Form von Elektromagneten oder Elektro-Permanent-Magneten ausgebildet sind.

11. Vorrichtung nach einem der Ansprüche 1 bis 10, **dadurch gekennzeichnet, dass** eine Umschalteinheit (6) vorhanden ist, mittels derer die Pole der polumschaltbaren Magnete (2) umschaltbar sind.

12. Vorrichtung nach einem der Ansprüche 1 bis 10, **dadurch gekennzeichnet, dass** diese eine Rechnereinheit (8a) mit einer Ein-/ Ausgabeeinheit (8) aufweist, wobei mit der Rechnereinheit (8a) Polteilungen für die Magnete (2) vorgegeben werden.

13. Vorrichtung nach Anspruch 12, **dadurch gekennzeichnet, dass** durch Eingaben in die Ein-/ Ausgabeeinheit (8) Polteilungen für die Magnete (2) vorgegeben werden.

14. Vorrichtung nach einem der Ansprüche 12 oder 13, **dadurch gekennzeichnet, dass** mit diesem Werkstücke (5) fixiert werden, wobei in der Rechnereinheit (8a) Kenngrößen oder Kennlinien von Werkstücken (5, 5') gespeichert sind, die über die Ein-/ Ausgabeeinheit (8) abrufbar sind.

15. Verfahren zur Fixierung von Gegenständen mittels Magnetkräften, die mit einer Anordnung von Magneten (2) generiert werden, wobei wenigstens eine Linearanordnung von Magneten (2) vorhanden ist, wobei Pole von Magneten (2) dieser Linearanordnung umschaltbar sind, wodurch eine Polteilung für diese Magnete (2) erhalten wird.
